# EUROPEAN PATENT SPECIFICATION

(11) **EP 3 379 104 B1**
(45) Date of publication and mention of the grant of the patent: **07.10.2020**
(21) Application number: 16866306.0
(22) Date of filing: 15.11.2016
(51) Int. Cl.: F16H 25/20, F16H 25/24, F16H 63/06, F16H 9/18

(54) **BELT-TYPE CONTINUOUSLY VARIABLE TRANSMISSION**
STUFENLOSES RIEMENGETRIEBE
TRANSMISSION À VARIATION CONTINUE DE TYPE PAR COURROIE

(30) Priority: 19.11.2015 JP 2015226922
(43) Date of publication of application: 26.09.2018
(73) Proprietor: Musashi Seimitsu Industry Co., Ltd., Aichi 441-8560 (JP); Honda Motor Co., Ltd., Tokyo 107-8556 (JP)
(72) Inventor: ATSUMI Takashi, Toyohashi-shi Aichi 441-8560 (JP); OKAMOTO Teruhisa, Toyohashi-shi Aichi 441-8560 (JP); YOSHIDA Yoshihiro, Toyohashi-shi Aichi 441-8560 (JP); MATSUURA Kohei, Wako-shi Saitama 351-0193 (JP); MORITA Go, Wako-shi Saitama 351-0193 (JP); YOSHIZAWA Hiroyasu, Wako-shi Saitama 351-0193 (JP)
(74) Representative: Kiwit, Benedikt
(86) International application number: PCT/JP2016/083795
(87) International publication number: WO 2017/086305

(56) References cited:
- JP-A- 2007 523 309
- JP-A- 2014 196 775
- US-A- 4 909 776
- US-A1- 2004 235 596

## Description

### TECHNICAL FIELD

The present invention relates to an improvement of a belt-type continuously variable transmission that includes a drive pulley that is supported on an input shaft, a driven pulley that is supported on an output shaft, a belt that is wound around the two pulleys, and an actuator that can change a groove width of either one of the two pulleys.

### BACKGROUND ART

As an actuator of such a belt-type continuously variable transmission, as disclosed in Patent Document 1 below, an actuator having a motor and a screw feed mechanism that includes a nut member that is rotated by receiving rotational power of the motor and a threaded shaft that converts rotation of the nut member into linear motion and drives a pulley is already known. EP 2 784 358 A shows a V-belt continuously variable transmission provided with an actuator that uses ordinary screws threads in place of a ball screw. As a motor is driven to rotate a nut member, an output rod is moved axially to move a movable sheave member toward or away from a fixed sheave member. A female screw is formed on the nut member and a male thread is formed on the output rod.

Patent Document 1: Japanese Patent Application Laid-open No. 2012-21609

### SUMMARY OF THE INVENTION

### PROBLEMS TO BE SOLVED BY THE INVENTION

In the actuator disclosed in Patent Document 1 above, since a ball screw is used as the screw feed mechanism, the reverse efficiency (the efficiency with which linear motion of the threaded shaft is converted into rotary motion) of the screw is as high as the forward efficiency (the efficiency with which rotary motion of the threaded shaft is converted into linear motion), and the threaded shaft can easily carry out a stroke (linear motion). Because of this, when mounting the actuator on a transmission case, it is possible to adjust the stroke position (position in the linear motion direction) of the threaded shaft to a prescribed position by gauging when mounting it on the case without precisely adjusting the position in advance. However, although there is such an advantage, since the ball screw is expensive, it is the main cause of increased cost of the actuator.

On the other hand, when a screw feed mechanism not employing a ball is used as an inexpensive substitute for the ball screw, since the reverse efficiency of the screw is lower than the forward efficiency, the threaded shaft cannot simply carry out a stroke as for the ball screw. Because of this, it is difficult to adjust the stroke position of the threaded shaft after the actuator is mounted on the transmission case, and the actuator cannot be mounted on the case unless the stroke position of the threaded shaft is adjusted to a prescribed position in advance before mounting it on the case, which is a problem.

The present invention has been accomplished in light of such circumstances, and it is an object thereof to obtain a belt-type continuously variable transmission that enables the stroke position of a threaded shaft to be easily adjusted even when a screw feed mechanism in which the efficiency of converting linear motion of the threaded shaft into rotary motion is lower than the efficiency of converting rotary motion into linear motion is used.

### MEANS FOR SOLVING THE PROBLEMS

In order to attain the above object, according to a first aspect of the present invention, there is provided a belt-type continuously variable transmission comprising a drive pulley that is supported on an input shaft, a driven pulley that is supported on an output shaft, a belt that is wound around the two pulleys, a case and an actuator that can change a groove width of either one of the two pulleys, and the actuator having a motor, a screw feed mechanism that includes a nut member and a threaded shaft, and a housing which forms an outer shell of the actuator, the housing having an outer wall face mounted on the case, the nut member being rotated by receiving rotational power of the motor, the threaded shaft converting rotation of the nut member into linear motion and changing a groove width of the either one of the pulley, and the actuator being provided with an operation part that can make the nut member rotate without depending on the rotational power of the motor, and the operating part being mounted on a side of the housing opposite to the outer wall face.

Further, according to a second aspect of the present invention, in addition to the first aspect, with regard to the screw feed mechanism the efficiency when linear motion of the threaded shaft is converted into rotary motion is lower than the efficiency when rotary motion is converted into linear motion.

Furthermore, according to a third aspect of the present invention, in addition to the first or second aspect, one end of the threaded shaft extends through the housing and is exposed outside, and the actuator is provided with restriction means that restricts the maximum amount of stroke in a linear motion direction toward the one end side of the threaded shaft.

Moreover, according to a fourth aspect of the present invention, in addition to the third aspect, the transmission comprises an arm that is linked to the either one of the pulleys via a bearing and a case that houses the two pulleys, the belt, and the arm, the actuator being mounted on the case with the threaded shaft inserted into the case in order to connect the threaded shaft and the arm, and the maximum amount of stroke in the linear motion direction toward the one end side of the threaded shaft, which is restricted by the restriction means, being set to be longer than a maximum distance from a mounting face of the actuator via which the actuator is mounted on the case up to the arm.

Further, according to a fifth aspect of the present invention, in addition to any one of the first to fourth aspects, the actuator comprises a power transmitting gear that transmits rotational power of the motor, the operation part being provided on a rotating shaft of the power transmitting gear, and the nut member of the screw feed mechanism being made rotatable by operating the operation part so as to rotate the power transmitting gear.

Furthermore, according to a sixth aspect of the present invention, in addition to any one of the first to fifth aspects, the housing is provided with an opening enabling operation of the operation part and a lid member for covering the opening.

Moreover, according to a seventh aspect of the present invention, in addition to any one of the first to sixth aspects, the actuator is provided with a rotation-preventing part that prevents the threaded shaft from rotating accompanying rotation of the nut member by contacting the threaded shaft of the screw feed mechanism.

An outer wall face 14a of an embodiment corresponds to the mounting face of the present invention, a stepped gear 23 of the embodiment corresponds to the power transmitting gear of the present invention, and a C ring 30 of the embodiment corresponds to the restriction means of the present invention.

### EFFECTS OF THE INVENTION

In accordance with the first aspect of the present invention, since the operation part, which can rotate the nut member of the screw feed mechanism without depending on the rotational power of the motor, is provided on the actuator, it is possible to make the threaded shaft stroke by operating the operation part and rotating the nut member. Therefore, even when a screw feed mechanism in which the reverse efficiency of a screw is lower than the forward efficiency is used, it is possible to easily adjust the stroke position of the threaded shaft. Because of this, when the actuator is mounted on the transmission case, even if the stroke position of the threaded shaft is not precisely adjusted in advance, it becomes possible to adjust it to a prescribed position by gauging when mounting on the case, thus improving the ease of assembly. Particularly when the stroke position must be adjusted by inserting the threaded shaft into a case that is already mounted on a vehicle body, etc., the ease of assembly can be improved to a great extent.

Furthermore, in accordance with the second aspect of the present invention, since a screw feed mechanism is used in which the efficiency when linear motion of the threaded shaft is converted into rotary motion is lower than the efficiency when rotary motion is converted into linear motion, the first aspect of the present invention can be exhibited effectively.

Moreover, in accordance with the third aspect of the present invention, since restriction means that restricts the maximum amount of stroke in the linear motion direction toward the one end side of the threaded shaft is provided on the actuator, in the actuator having a structure in which one end of the threaded shaft extends through the housing and is exposed to the outside, it is possible to prevent the threaded shaft from accidentally coming off from the housing due to excessive adjustment when adjusting the stroke position of the threaded shaft.

Furthermore, in accordance with the fourth aspect of the present invention, since the maximum amount of stroke in the linear motion direction toward the one end side of the threaded shaft, which is restricted by the restriction means, is set so as to be longer than the maximum distance from the mounting face of the actuator, via which it is mounted on the case, up to the arm, if the threaded shaft is adjusted in advance to the maximum amount of stroke, when the actuator is mounted on the case, even in a state in which the arm is hidden within the case and cannot be seen, a situation in which the threaded shaft cannot reach the arm can be avoided, thus enabling the threaded shaft and the arm to be reliably connected.

Moreover, in accordance with the fifth aspect of the present invention, since the rotating shaft of the power transmitting gear is provided with an operation part, compared with an arrangement in which a nut member itself is provided with an operation part that makes it rotate, the structure and the degree of freedom in placement of the operation part become simple. Furthermore, since the nut member is rotatable via the power transmitting gear, the rotational torque can be reduced compared with a case in which the nut member is rotated directly, it thus becomes easy to adjust the stroke position of the threaded shaft, and it is possible to prevent the operation part from being broken by a tool, etc.

Moreover, in accordance with the sixth aspect of the present invention, since the operation part can be operated via the opening of the housing, it is possible to improve the ease of maintenance, and due to the opening being provided with the lid member it is possible to prevent foreign matter from entering the housing.

Furthermore, in accordance with the seventh aspect of the present invention, since the actuator is provided with a rotation-preventing part that prevents rotation of the threaded shaft by contacting the threaded shaft, when adjusting the stroke position of the threaded shaft, the threaded shaft does not rotate accompanying rotation of the nut member. Because of this, it is unnecessary to restrain the threaded shaft so that it does not rotate accompanying rotation of the nut member with one hand while operating the operation part with the other hand, thus achieving an improvement in the ease of assembly.

### BRIEF DESCRIPTION OF DRAWINGS

[FIG. 1] FIG. 1 is a plan sectional view of a belt-type continuously variable transmission in an embodiment of the present invention, (first embodiment)
[FIG. 2] FIG. 2 is a side view of the belt-type continuously variable transmission in the embodiment of the present invention, (view in the direction of arrow 2 in Fig. 1) (first embodiment)
[FIG. 3] FIG. 3 is an enlarged view of a portion shown by arrow 3 in FIG. 1. (first embodiment)
[FIG. 4] FIG. 4 is a sectional view along line 4-4 in FIG. 3. (first embodiment)

### EXPLANATION OF REFERENCE NUMERALS AND SYMBOLS

- 2: Input shaft
- 3: Output shaft
- 4: Drive pulley
- 5: Driven pulley
- 6: Belt
- 7: Case
- 10: Bearing
- 11: Arm
- 12: Actuator
- 13: Threaded shaft
- 14a: Mounting face (outer wall face)
- 14e: Rotation-preventing part
- 15a: Opening
- 15b: Lid member
- 16: Housing
- 19: Motor
- 21: Nut member
- 23: Power transmitting gear (stepped gear)
- 23c: Rotating shaft
- 31: Screw feed mechanism
- 25: Operation part
- 30: Restriction means (C ring)
- 1: Maximum distance from mounting face to arm

### MODES FOR CARRYING OUT THE INVENTION

An embodiment of the present invention is explained below by reference to the attached drawings.

### FIRST EMBODIMENT

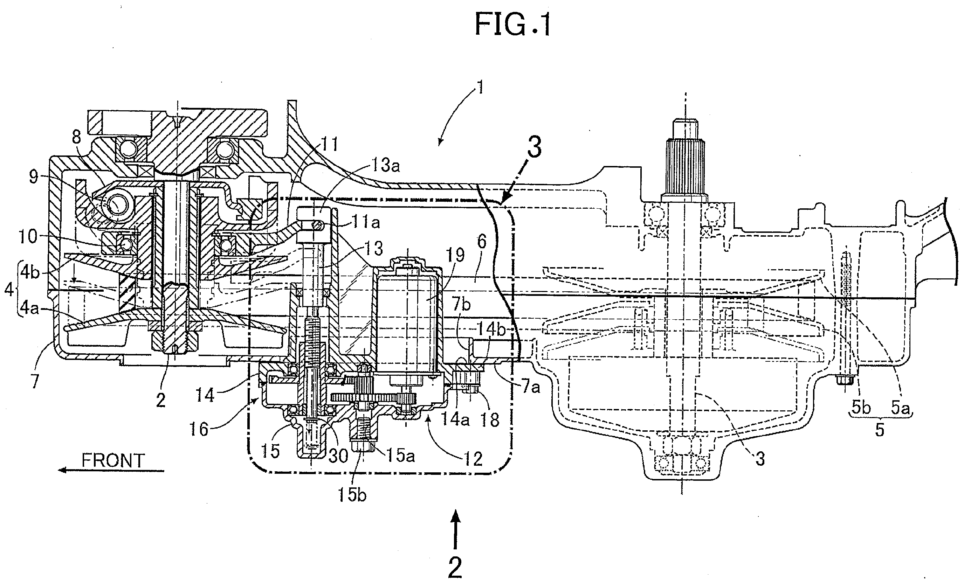

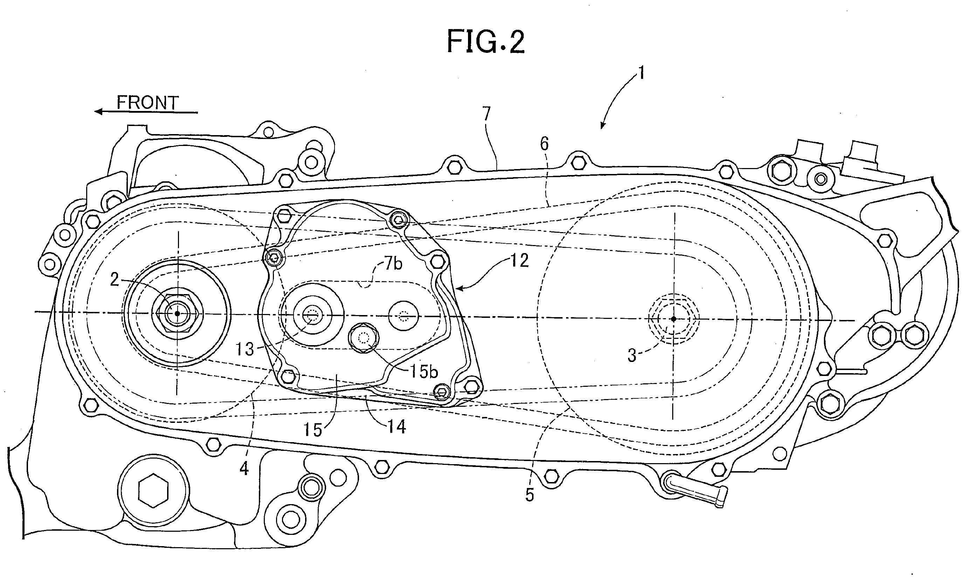

FIG. 1 is a plan sectional view of a belt-type continuously variable transmission related to the present invention, and FIG. 2 is a view in the direction of arrow 2 in Fig. 1.

As shown in FIG. 1 and FIG. 2, the belt-type continuously variable transmission 1 includes an input shaft 2 to which power is transmitted from a drive source such as an engine or a motor, which is not illustrated, an output shaft 3 that is parallel to the input shaft 2 and transmits power to a wheel, which is not illustrated, a drive pulley 4 that is supported on the input shaft 2, a driven pulley 5 that is supported on the output shaft 3, a belt 6 that is wound around the two pulleys 4 and 5, a case 7 that houses the two pulleys 4 and 5 and the belt 6, and an actuator 12 that is mounted on the case 7 and can change the groove width of either one of the drive pulley 4 and the driven pulley 5, the belt-type continuously variable transmission 1 being installed in a vehicle such as a two-wheeled motor vehicle.

The drive pulley 4 is formed from a drive-side fixed sheave 4a that is fixed to the input shaft 2 and a drive-side movable sheave 4b that is supported on the input shaft 2 and is movable in the axial direction of the input shaft 2, and the driven pulley 5 is formed from a driven-side fixed sheave 5a that is fixed to the output shaft 3 and a driven-side movable sheave 5b that is supported on the output shaft 3 and is movable in the axial direction of the output shaft 3.

A ramp plate 8 is fixed to the input shaft 2 behind the drive-side movable sheave 4b, and a plurality of centrifugal weights 9 are retained between the drive-side movable sheave 4b and the ramp plate 8. When the input shaft 2 rotates and a centrifugal force corresponding to the rotational speed thereof acts on the centrifugal weight 9, the centrifugal weight 9 moves radially outward along a cam face of the drive-side movable sheave 4b, the drive-side movable sheave 4b is moved toward the drive-side fixed sheave 4a side, and the winding radius of the belt 6 increases.

Furthermore, an arm 11 is relatively rotatably linked to one of the movable sheaves 4b and 5b of the two pulleys 4 and 5, the drive-side movable sheave 4b in this embodiment, via a bearing 10, and the actuator 12 is connected to the arm 11 so that a hook portion 13a formed on a threaded shaft 13 engages with a pin 11a formed on the arm 11, the actuator 12 moving the drive-side movable sheave 4b in the axial direction of the input shaft 2 via the arm 11 and changing the groove width of the drive pulley 4 in cooperation with centrifugal weight 9.

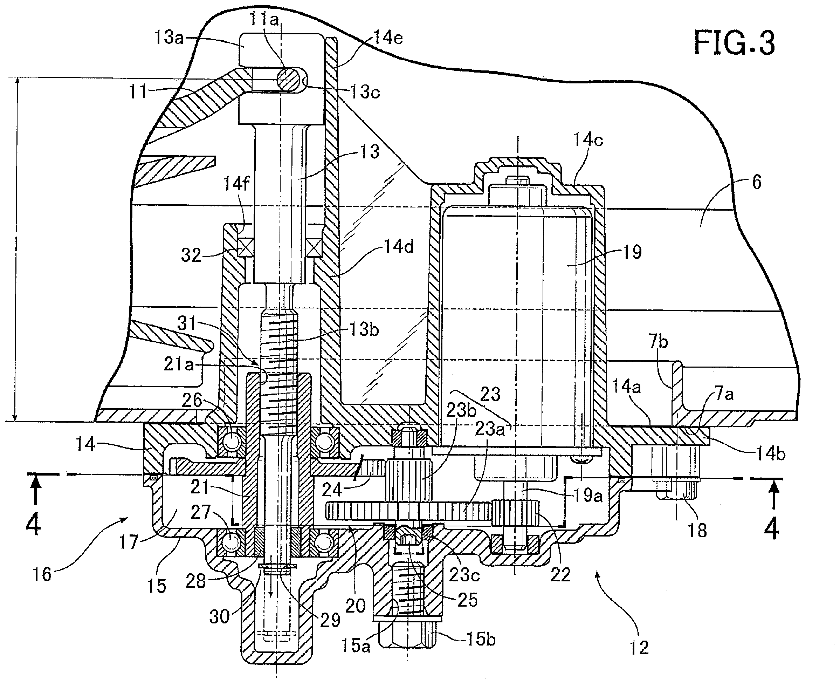

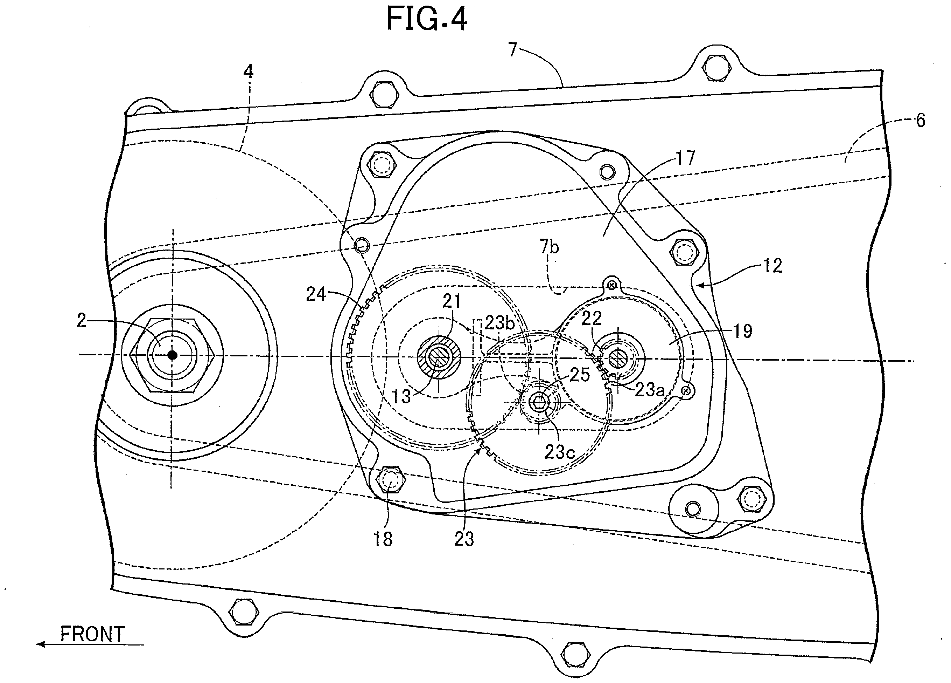

Referring in addition to FIG. 3, which is an enlarged view of a part shown by arrow 3 in FIG. 1, and FIG. 4, which is a sectional view along line 4-4 in FIG. 3, the actuator 12 includes a housing 16 formed from a first housing half body 14 and a second housing half body 15, and a flat housing space 17 is defined between the first and second housing half bodies 14 and 15. An outer wall face 14a, on the side opposite to the second housing half body 15, of the first housing half body 14 is a mounting face that is mounted on a mounting portion 7a formed on the case 7, and a fixing portion 14b of the first housing half body 14 protruding further outside than the housing space 17 is joined to the mounting portion 7a via a bolt 18.

First and second bulge portions 14c and 14d protrude into the case 7 from the outer wall face 14a of the first housing half body 14, a motor 19 as a drive source is disposed within the first bulge portion 14c, and the threaded shaft 13 is disposed within the second bulge portion 14d. Furthermore, formed in the mounting portion 7a of the case 7 is an opening 7b through which the first and second bulge portions 14c and 14d are inserted into the case 7.

Disposed within the housing space 17 are a reduction gear mechanism 20 for reducing the speed of the output of the motor 19 and a nut member 21 to which the rotational power of the motor 19 is transmitted via the reduction gear mechanism 20. The reduction gear mechanism 20 is formed as a two-stage reduction system from a pinion gear 22 fixed to a motor shaft 19a of the motor 19, a stepped gear 23 having a large gear 23a and a small gear 23b and having the large gear 23a meshing with the pinion gear 22, and a spur gear 24 fitted around the outer periphery of the nut member 21 and meshing with the small gear 23b of the stepped gear 23. An operation part 25 that can make the stepped gear 23 rotate from the outside of the second housing half body 15 is formed on an end part, on the second housing half body 15 side, of a rotating shaft 23c of the stepped gear 23. This operation part 25 is formed from a cross recess, a straight recess, a triangular recess, a hexagonal recess, etc. (a hexagonal recess in the embodiment, but not limited thereto), and the second housing half body 15 is provided with an opening 15a that opposes the operation part 25 and enables a tool, which is not illustrated, that can engage with the operation part 25 to be inserted thereinto, and a lid member 15b that covers the opening 15a when the tool is not inserted.

The nut member 21 is pivotably supported on the first and second housing half bodies 14 and 15 via bearings 26 and 27. A female thread 21a is formed on the inner periphery of the nut member 21, the threaded shaft 13 having a male thread 13b that meshes with the female thread 21a is slidably disposed within the second bulge portion 14d, which protrudes from the outer wall face 14a of the first case half body 14, and when the nut member 21 receives rotational power of the motor 19 and rotates, the threaded shaft 13 moves forward and backward along the axis of the nut member 21.

A sliding bearing 28 for pivotably and slidably retaining the threaded shaft 13 is provided at the lower end of the nut member 21 between the nut member 21 and the threaded shaft 13. Furthermore, an annular groove 29 is formed at the lower end of the threaded shaft 13, and a C ring 30 is fitted into the groove 29, the C ring 30 being restriction means that abuts against the lower end of the sliding bearing 28 to thus restrict further upward movement of the threaded shaft 13. The nut member 21 and the threaded shaft 13 form a screw feed mechanism 31.

The female thread 21a and the male thread 13b are formed as trapezoidal screws, and the efficiency (reverse efficiency) when linear motion of the threaded shaft 13 is converted into rotary motion is lower than the efficiency (forward efficiency) when rotary motion is converted into linear motion. Because of this, the threaded shaft 13 cannot easily be made to stroke (undergo linear motion) as for a ball screw, but since the operation part 25 that enables the stepped gear 23 to be rotated from the outside of the second housing half body 15 is formed on the end part, on the second housing half body 15 side, of the stepped gear 23, it is possible to rotate the nut member 21 by inserting a tool, which is not illustrated, into the operation part 25 via the opening 15a of the second housing half body 15 and rotating the stepped gear 23, and this enables the threaded shaft 13 to be made to stroke. Therefore, even when a trapezoidal screw for which the reverse efficiency of the screw is lower than the forward efficiency is used, the stroke position (position in the linear motion direction) of the threaded shaft 13 can easily be adjusted.

A plate-shaped portion 14e that contacts a back face of the hook portion 13a and prevents rotation of the threaded shaft 13 is projectingly provided as a rotation-preventing part on the extremity of the second bulge portion 14d, and prevents rotation of the threaded shaft 13 accompanying rotation of the nut member 21, but the arrangement of the rotation-preventing part is not limited thereto. Furthermore, an opening 14f at the extremity of the second bulge portion 14d through which one end of the threaded shaft 13 extends and is exposed to the outside is sealed with a seal member 32, thus preventing dirt, etc. from entering the housing 16.

When the motor 19 rotates, its rotation is transmitted from the reduction gear mechanism 20 to the nut member 21, and the threaded shaft 13 is made to undergo forward and backward movement by rotation of the nut member 21. In this process, since the hook portion 13a formed at the extremity of the threaded shaft 13 is formed into a squared U shape so as to transmit forward and backward movement of the threaded shaft 13 to the arm 11, and a gap 13c between parallel parts thereof is engaged with the pin 11a of the arm 11, the arm 11 moves along the axial direction of the input shaft 2 in response to the forward and backward movement of the threaded shaft 13, and the drive-side movable sheave 4b is moved in the axial direction of the input shaft 2.

The maximum amount of stroke of the threaded shaft 13, which is restricted by the C ring 30, is set so as to be longer than a maximum distance 1 from the outer wall face 14a, which is a mounting face of the actuator 12 via which it is mounted on the case 7, up to the arm 11; if the threaded shaft 13 is extended to the maximum amount of stroke in advance, even in a state in which the arm 11 is hidden within the case 7 and cannot be seen, a situation in which the hook portion 13a cannot reach the pin 11a can be avoided.

Mounting of the actuator 12 on the case 7 is carried out as follows.

First, in a state in which the stroke position of the threaded shaft 13 is made longer than the maximum distance 1 from the outer wall face 14a, which is the mounting face of the actuator 12, up to the arm 11 by driving the motor 19 or operating the operation part 25 to rotate the nut member 21, and the first and second bulge portions 14c and 14d of the actuator 12 are inserted into the case 7 via the opening 7b of the case 7.

In this process, since the maximum amount of stroke of the threaded shaft 13 restricted by the C ring 30 is set so as to be longer than the maximum distance 1 from the mounting face 14a of the actuator 12 to the arm 11, a gap can be provided between the mounting face 14a of the actuator 12 and the mounting portion 7a of the case 7, the degree of freedom in movement of the hook portion 13a is increased by a portion corresponding to the gap, and it becomes possible to easily engage the hook portion 13a of the threaded shaft 13 with the pin 11a of the arm 11. The stroke position of the threaded shaft 13 can then be adjusted by operating the operation part 25 to rotate the nut member 21 in a state in which the hook portion 13a is engaged with the pin 11a, and it is possible to gradually put the mounting face 14a of the actuator 12 and the mounting portion 7a of the case 7 close to each other to thus put the mating faces of the two into intimate contact. Therefore, it is possible to mount the actuator 12 on the case 7 by fixing the fixing portion 14b of the actuator 12 to the mounting portion 7a of the case 7 by means of the bolt 18 in the above state.

A stopper member (not illustrated) opposing a head part of the hook portion 13a is projectingly provided within the case 7 in the insertion direction of the threaded shaft 13, and the height of this stopper member is set so that the gap 13c of the hook portion 13a and the pin 11a of the arm 11 oppose each other when the head part of the hook portion 13a abuts against the stopper member. By so doing, when the head part of the hook portion 13a of the threaded shaft 13 inserted through the opening 7b of the case 7 makes contact with the stopper member, the hook portion 13a can be engaged with the pin 11a by simply moving the threaded shaft 13 close to the arm 11.

The operation of this embodiment is now explained.

Since there are provided the drive pulley 4 supported of the input shaft 2, the driven pulley 5 supported on the output shaft 3, the belt 6 wound around the two pulleys 4 and 5, and the actuator 12, which can change the groove width of either one of the two pulleys 4 and 5, the actuator 12 has the motor 19 and the screw feed mechanism 31, which includes the nut member 21, which receives rotational power of the motor 19 and rotates, and the threaded shaft 13, which converts rotation of the nut member 21 into linear motion and changes the groove width of the either one of the pulleys, and the operation part 25, which can rotate the nut member 21 without depending on the rotational power of the motor 19, is provided on the actuator 12, it is possible to make the threaded shaft 13 stroke by operating the operation part 25 and rotating the nut member 21. Therefore, even when the efficiency of the screw feed mechanism 31 when linear motion of the threaded shaft 13 is converted into rotary motion is lower than the efficiency when rotary motion is converted into linear motion, since it is possible to easily adjust the stroke position of the threaded shaft 13, when the actuator 12 is mounted on the transmission case 7, even if the stroke position of the threaded shaft 13 is not precisely adjusted in advance, it becomes possible to adjust it to a prescribed position by gauging when mounting on the case 7, thus improving the ease of assembly. Because of this, particularly when the stroke position must be adjusted by inserting the threaded shaft 13 into the case 7, which is already mounted on a vehicle body, etc., the ease of assembly can be improved to a great extent.

Moreover, since one end of the threaded shaft 13 extends through the housing 16 forming an outer shell of the actuator 12 and is exposed to the outside, and the C ring 30 as restriction means that restricts the maximum amount of stroke in the linear motion direction toward the one end side of the threaded shaft 13 is provided on the actuator 12, in the actuator 12 having a structure in which one end of the threaded shaft 13 extends through the housing 16 and is exposed to the outside, it is possible to prevent the threaded shaft 13 from accidentally coming off from the housing 16 due to excessive adjustment when adjusting the stroke position of the threaded shaft 13.

Furthermore, since the actuator 12 is mounted on the case 7 by inserting the threaded shaft 13 into the case 7 in order to connect the threaded shaft 13 and the arm 11, and the maximum amount of stroke of the threaded shaft 13, which is restricted by the C ring 30, is set so as to be longer than the maximum distance 1 from the mounting face 14a of the actuator 12, via which it is mounted on the case 7, up to the arm 11, if the threaded shaft 13 is adjusted in advance to the maximum amount of stroke, when the actuator 12 is mounted on the case 7, even in a state in which the arm 11 is hidden within the case 7 and cannot be seen, a situation in which the threaded shaft 13 cannot reach the arm 11 can be avoided, thus enabling the threaded shaft 13 and the arm 11 to be reliably connected. Moreover, since a gap can be provided between the mounting face 14a of the actuator 12 and the mounting portion 7a of the case 7, and the degree of freedom in movement of the hook portion 13a is increased by a portion corresponding to the gap, it becomes possible to easily engage the hook portion 13a of the threaded shaft 13 with the pin 11a of the arm 11.

Furthermore, since the actuator 12 includes the stepped gear 23, which transmits rotational power of the motor 19, the operation part 25 is provided on the rotating shaft 23c of the stepped gear 23, and the nut member 21 of the screw feed mechanism 31 can be rotated by operating the operation part 25 to rotate the stepped gear 23, compared with a case in which the operation part 25 for rotating the nut member 21 is provided on the nut member 21 itself, the structure of the operation part 25 and the degree of freedom of placement become simple and, moreover, since the rotational torque can be reduced compared with a case in which the nut member 21 is rotated directly, it becomes easy to adjust the stroke position of the threaded shaft 13, and it is possible to prevent the operation part 25 from being broken by a tool, etc.

Furthermore, since the housing 16 forming an outer shell of the actuator 12 is provided with the opening 15a enabling operation of the operation part 25 and the lid member 15b covering the opening 15a, it is possible to improve the ease of maintenance and to prevent foreign matter from entering the housing 16.

Moreover, since the actuator 12 is provided with the rotation-preventing part 14e, which prevents rotation of the threaded shaft 13 accompanying rotation of the nut member 21 by contacting the threaded shaft 13 of the screw feed mechanism 31, when adjusting the stroke position of the threaded shaft 13, the threaded shaft 13 does not rotate accompanying rotation of the nut member 21. Because of this, it is unnecessary to restrain the threaded shaft 13 so that it does not rotate accompanying rotation of the nut member 21 with one hand while operating the operation part 25 with the other hand, thus achieving an improvement in the ease of assembly.

An embodiment of the present invention is explained above, but the present invention is not limited to the above embodiment and may be modified in a variety of ways as long as the modifications do not depart from the spirit and scope thereof.

For example, the belt-type continuously variable transmission of the present invention is not limited to one that is mounted on a two-wheeled motor vehicle, and may be used in a vehicle of any mode.

Furthermore, the screw feed mechanism of the actuator of the present invention is not limited to an arrangement in which the efficiency when linear motion of the threaded shaft is converted into rotary motion is lower than the efficiency when rotary motion is converted into linear motion, and a screw feed mechanism of any mode may be employed.

Moreover, the connecting mechanism for the threaded shaft and the arm is not limited to connection by a squared U-shaped part and a pin, and various connecting mechanisms such as for example insertion of a pin into a center hole of a donut-shaped portion may be employed.

Furthermore, placement of the operation part 25 is not limited to the rotating shaft 23c of the stepped gear 23, and it may be provided on the motor shaft 19a. In addition, an operation part may be provided on a power transmitting gear of the reduction gear mechanism 20 for transmitting rotational power of the motor 19, such as the pinion gear 22 or the stepped gear 23, or an operation part may be provided directly on the nut member 21.

## Claims

1. A belt-type continuously variable transmission comprising a drive pulley (4) that is supported on an input shaft (2), a driven pulley (5) that is supported on an output shaft (3), a belt (6) that is wound around the two pulleys (4, 5), a case (7) and an actuator (12) that can change a groove width of either one of the two pulleys (4, 5), and
the actuator (12) having a motor (19), a screw feed mechanism (31) that includes a nut member (21) and a threaded shaft (13), and a housing (16) which forms an outer shell of the actuator (12), the housing (16) having an outer wall face (14a) mounted on the case (7), the nut member (21) being rotated by receiving rotational power of the motor (19), the threaded shaft (13) converting rotation of the nut member (21) into linear motion and changing a groove width of said either one of the pulley,
wherein the actuator (12) is provided with an operation part (25) that can make the nut member (21) rotate without depending on the rotational power of the motor (19), and the operating part (25) is mounted on a side of the housing (16) opposite to the outer wall face (14a).

2. The belt-type continuously variable transmission according to Claim 1, wherein with regard to the screw feed mechanism (31) the efficiency when linear motion of the threaded shaft (13) is converted into rotary motion is lower than the efficiency when rotary motion is converted into linear motion.

3. The belt-type continuously variable transmission according to Claim 1 or Claim 2, wherein one end of the threaded shaft (13) extends through the housing (16) and is exposed outside, and the actuator (12) is provided with restriction means (30) that restricts the maximum amount of stroke in a linear motion direction toward said one end side of the threaded shaft (13).

4. The belt-type continuously variable transmission according to Claim 3, comprising an arm (11) that is linked to said either one of the pulleys (4, 5) via a bearing (10) and a case (7) that houses the two pulleys (4, 5), the belt (6), and the arm (11), the actuator (12) being mounted on the case (7) with the threaded shaft (13) inserted into the case (7) in order to connect the threaded shaft (13) and the arm (11), and the maximum amount of stroke in the linear motion direction toward said one end side of the threaded shaft (13), which is restricted by the restriction means (30), being set to be longer than a maximum distance (1) from a mounting face (14a) of the actuator (12) via which the actuator (12) is mounted on the case (7) up to the arm (11).

5. The belt-type continuously variable transmission according to any one of Claim 1 to Claim 4, wherein the actuator (12) comprises a power transmitting gear (23) that transmits rotational power of the motor (19), the operation part (25) being provided on a rotating shaft (23c) of the power transmitting gear (23), and the nut member (21) of the screw feed mechanism (31) being made rotatable by operating the operation part (25) so as to rotate the power transmitting gear (23).

6. The belt-type continuously variable transmission according to any one of Claim 1 to Claim 5, wherein the housing (16) is provided with an opening (15a) enabling operation of the operation part (25) and a lid member (15b) for covering the opening (15a).

7. The belt-type continuously variable transmission according to any one of Claim 1 to Claim 6, wherein the actuator (12) is provided with a rotation-preventing part (14e) that prevents the threaded shaft (13) from rotating accompanying rotation of the nut member (21) by contacting the threaded shaft (13) of the screw feed mechanism (31).

## Patentansprüche

1. Stufenloses Riemengetriebe, das eine Antriebscheibe (4), die an einer Eingangswelle (2) gehalten wird, eine angetriebene Scheibe (5), die an einer Ausgangswelle (3) gehalten wird, einen Riemen (6), der um die beiden Scheiben (4, 5) gewickelt ist, ein Gehäuse (7) und einen Aktuator (12) aufweist, der eine Nutbreite von einer der beiden Scheiben (4, 5) ändern kann, und
der Aktuator (12) einen Motor (13), einen Schneckenzufuhrmechanismus (31), der ein Mutternelement (21) und eine Gewindewelle (13) aufweist, und ein Gehäuse (16) aufweist, das eine äußere Verkleidung des Aktuators (12) bildet, wobei das Gehäuse (16) eine Außenwandfläche (14a) hat, die am Gehäuse (7) angebracht ist, wobei das Mutternelement (21) rotiert wird, indem die Rotationskraft des Motors (19) aufgenommen wird, wobei die Gewindewelle (13) die Rotation des Mutternelements (21) in eine lineare Bewegung umwandelt und eine Nutbreite von einer der beiden Scheiben ändert, wobei
der Aktuator (12) mit einer Betätigungskomponente (25) vorgesehen ist, die das Mutternelement (21) zum Rotieren bringen kann, ohne von der Rotationskraft des Motors (19) abzuhängen, und das Betätigungsteil (25) an einer Seite des Gehäuses (16) gegenüberliegend zu der Außenwandfläche (14a) angebracht ist.

2. Stufenloses Riemengetriebe nach Anspruch 1, wobei bezüglich des Schneckenzufuhrmechanismus (31) die Effizienz bei der Umwandlung der linearen Bewegung der Gewindewelle (13) in eine Rotationsbewegung niedriger ist als die Effizienz bei der Umwandlung der Rotationsbewegung in eine lineare Bewegung.

3. Stufenlose Riemengetriebe nach Anspruch 1 oder Anspruch 2, wobei ein Ende der Gewindewelle (13) durch das Gehäuse (16) verläuft und nach außen freigelegt ist, und der Aktuator (12) mit Beschränkungsmitteln (30) vorgesehen ist, die den maximalen Hubbetrag in einer linearen Bewegungsrichtung in Richtung der einen Endseite der Gewindewelle (13) beschränken.

4. Stufenloses Riemengetriebe nach Anspruch 3, das einen Arm (11) aufweist, der mit einer von den beiden Scheiben (4, 5) über ein Lager (10) verbunden ist und ein Gehäuse (7), das die beiden Scheiben (4, 5), den Riemen (6) und den Arm (11) aufnimmt, wobei der Aktuator (12) am Gehäuse (7) mit der Gewindewelle (13) in das Gehäuse (7) eingesetzt angebracht ist, um die Gewindewelle (13) und den Arm (11) zu verbinden, und der maximale Hubbetrag in der linearen Bewegungsrichtung in Richtung der einen Endseite der Gewindewelle (13), die durch die Beschränkungsmittel (30) beschränkt ist, als länger festgelegt ist als ein maximaler Abstand (1) von einer Befestigungsfläche (14a) des Aktuators (12), über die der Aktuator (12) am Gehäuse (7) angebracht ist, bis zum Arm (11).

5. Stufenloses Riemengetriebe nach einem der Ansprüche 1 bis 4, wobei der Aktuator (12) ein Kraftübertragungszahnrad (23) aufweist, das eine Rotationskraft des Motors (19) überträgt, wobei das Betätigungsteil (25) an einer Rotationswelle (23c) des Kraftübertragungszahnrads (23) vorgesehen ist, und das Mutternelement (21) des Schneckenzufuhrmechanismus (31) durch Betreiben des Betätigungsteils (25) rotierbar gemacht wird, um so das Kraftübertragungszahnrad (23) zu rotieren.

6. Stufenloses Riemengetriebe nach einem der Ansprüche 1 bis 5, wobei das Gehäuse (16) mit einer Öffnung (15a), die ein Betreiben des Betätigungsteils (25) ermöglicht, und einem Deckelelement (15) zum Abdecken der Öffnung (15a) vorgesehen ist.

7. Stufenlose Riemengetriebe nach einem der Ansprüche 1 bis 6, wobei der Aktuator (12) mit einem Teil (14e) zum Verhindern der Rotation vorgesehen ist, das verhindert, dass die Gewindewelle (13) begleitend zur Rotation des Mutternelements (21) durch Kontakt mit der Gewindewelle (13) des Schneckenzufuhrmechanismus (31) rotiert.

## Revendications

1. Transmission à variation continue de type par courroie comprenant une poulie d'entraînement (4) qui est supportée sur un arbre d'entrée (2), une poulie entraînée (5) qui est supportée sur un arbre de sortie (3), une courroie (6) qui est enroulée autour des deux poulies (4, 5), un carter (7) et un actionneur (12) pouvant changer une largeur de rainure de l'une ou l'autre des deux poulies (4, 5), et
l'actionneur (12) ayant un moteur (19), un mécanisme d'alimentation à vis (31) qui comporte un organe d'écrou (21) et un arbre fileté (13), et un logement (16) qui forme une coque extérieure de l'actionneur (12), le logement (16) ayant une face de paroi extérieure (14a) montée sur le carter (7), l'organe d'écrou (21) étant tourné par la réception d'une puissance rotationnelle du moteur (19), l'arbre fileté (13) convertissant une rotation de l'organe d'écrou (21) en mouvement linéaire et changeant une largeur de rainure de ladite une ou de ladite autre des poulies,
dans laquelle l'actionneur (12) est pourvu d'une partie d'actionnement (25) qui peut amener l'organe d'écrou (21) à tourner sans dépendre de la puissance rotationnelle du moteur (19), et la partie d'actionnement (25) est montée sur un côté du logement (16) à l'opposé de la face de paroi extérieure (14a).

2. Transmission à variation continue de type par courroie selon la revendication 1, dans laquelle, en ce qui concerne le mécanisme d'alimentation à vis (31), le rendement lorsqu'un mouvement linéaire de l'arbre fileté (13) est converti en mouvement rotatif est inférieur au rendement lorsqu'un mouvement rotatif est converti en mouvement linéaire.

3. Transmission à variation continue de type par courroie selon la revendication 1 ou la revendication 2, dans laquelle une extrémité de l'arbre fileté (13) s'étend à travers le logement (16) et est exposée à l'extérieur, et l'actionneur (12) est pourvu de moyens de limitation (30) qui limitent la quantité maximale de course dans une direction de mouvement linéaire vers ledit un côté d'extrémité de l'arbre fileté (13).

4. Transmission à variation continue de type par courroie selon la revendication 3, comprenant un bras (11) qui est relié à ladite une ou ladite autre des poulies (4, 5) via un palier (10) et un carter (7) qui loge les deux poulies (4, 5), la courroie (6) et le bras (11), l'actionneur (12) étant monté sur le carter (7) avec l'arbre fileté (13) inséré dans le carter (7) pour relier l'arbre fileté (13) et le bras (11), et la quantité maximale de course dans la direction de mouvement linéaire vers ledit un côté d'extrémité de l'arbre fileté (13), qui est limitée par les moyens de limitation (30), étant réglée pour être plus longue qu'une distance maximale (1) depuis une face de montage (14a) de l'actionneur (12) via laquelle l'actionneur (12) est monté sur le carter (7) jusqu'au bras (11).

5. Transmission à variation continue de type par courroie selon l'une quelconque de la revendication 1 à la revendication 4, dans laquelle l'actionneur (12) comprend un engrenage de transmission de puissance (23) qui transmet une puissance rotationnelle du moteur (19), la partie d'actionnement (25) étant prévue sur un arbre de rotation (23c) de l'engrenage de transmission de puissance (23), et l'organe d'écrou (21) du mécanisme d'alimentation à vis (31) étant rendu rotatif par l'actionnement de la partie d'actionnement (25) de manière à faire tourner l'engrenage de transmission de puissance (23).

6. Transmission à variation continue de type par courroie selon l'une quelconque de la revendication 1 à la revendication 5, dans laquelle le logement (16) est pourvu d'une ouverture (15a) permettant l'actionnement de la partie d'actionnement (25) et d'un organe de couvercle (15b) pour recouvrir l'ouverture (15a).

7. Transmission à variation continue de type par courroie selon l'une quelconque de la revendication 1 à la revendication 6, dans laquelle l'actionneur (12) est pourvu d'une partie d'interdiction de rotation (14e) qui interdit la rotation de l'arbre fileté (13) en accompagnement de la rotation de l'organe d'écrou (21) en entrant en contact avec l'arbre fileté (13) du mécanisme d'alimentation à vis (31).
